# EUROPEAN PATENT APPLICATION

(11) **EP 1 318 461 A1**
(43) Date of publication of application: **11.06.2003**
(21) Application number: 01129096.2
(22) Date of filing: 07.12.2001
(51) Int. Cl.: G06F 17/30

(54) **Method and computer system for refreshing client-data**

(71) Applicant: SAP Aktiengesellschaft, 69190 Walldorf (DE)
(72) Inventor: Cherdron, Markus, 69242 Mühlhausen (DE); Gangadharappa, Kiran, P-116 Sunnyvale, CA-94086 (US)

(57) **Abstract**

Computer-implemented method and computer system for refreshing client-data. A client (900) provides a) a predefined layout document (160-1) and b) predetermined client-data (150-T1 stored in a client-data cache (920-1). The layout document (160-1) uses the client-data (151) via predefined client-side application independent functions (100-1). The client (900) receives a sync-request (980-1) to synchronize the client-data (150) with corresponding server-data (151) of a server (901). The client (900) creates a client-data descriptor (170). The server (901) generates a server-data descriptor (171) that is dependent on the client-data descriptor (170), a server-side copy of predefined client-data (150-T0') and the server-data (151). The client (900) updates the predetermined client-data (150-T1) in the client-data cache (920-1) according to the server-data descriptor (171). The client-data (150-T1), the client-data descriptor (170) and the server-data descriptor (171) have a browser independent format.

## Description

### Field of the Invention

The present invention generally relates to electronic data processing, and more particularly, relates to method, computer program product and system for client-server communication.

### Background of the Invention

Separating layout information from data in a document (e.g. an XML document), is known in the art (see for example XSLT specification of W3C consortium). A server merges data and layout information to generate a browser compliant document. Via a network, the server sends the browser compliant document to a client, where the browser compliant document is visualized via a conventional browser, such as the MS Internet Explorer or Netscape Navigator. When refreshing the browser compliant document, the whole process is repeated. This requires a high bandwidth for exchanging layout information and data between the server and the client.

To reduce bandwidth requirements, local variables for data are stored at the client to avoid permanent reloading of the whole document when only a part of the document changes. The local variables are typically generated and accessed at runtime via browser dependent means that are compatible with a specific browser (e.g. MS Internet Explorer, Netscape Navigator) running on a specific operating system (e.g. MS Windows 2000, Palm OS, Macintosh). For example, such browser dependent means are implemented as JAVA-Script functions. Further, such browser dependent means depend on client-side application data structures used by the document currently loaded in the browser. For example, an application specific JAVA-Script function is document context specific and cannot be used in the context of a further document that may use the same application data because the application data structure is different in the context of the further document.

Further, when the server receives a request for refreshing data at the client, the server has to know, which browser is used by the client, to access a corresponding application that is compatible with the client's browser.

A prior art system according to the previous description is described in the US patent 6,199,082.

### Summary of the Invention

Hence, the present invention provides computer-implemented method, computer program product and computer system to provide a solution to the technical problem of server-side generated application code on a client, wherein the application code is dependent on a client-side browser (B) and the client-side operating system (OS) and uses client-side application data (client-data).

Before explaining how the technical problem is solved according to the present invention, a list of definitions of terms, as used hereinafter is provided:
client:
   client computer in a computer system.
server:
   server computer in the computer system.
interface document:
   document (e.g. markup language document), describing a graphical interface to be displayed on an output device of the client (e.g. a computer screen).
layout document:
   document describing the layout of a graphical interface. The layout document can be a markup language document (e.g. HTML) or a style-sheet language (e.g. XSL) document.
layout-ID:
   identifier of the layout document (e.g. universal resource indicator URI, universal resource locator URL).
client-data:
   application data stored on the client.
client-data cache:
   memory area of a client computer's memory to store client-data that are used by at least one layout document.
server-data:
   application data stored on the server.
sync-request:
   request to the client to synchronize the client-data with server-data of the server. The sync-request can be launched, for example, by a user, an application, a server, a further client, an element of the graphical interface, etc.
server request:
   request of the client to the server for server-data.
client-data descriptor:
   document (e.g. markup language document) including information about client-side modifications to predefined client-data used by a specific layout document.
server-data descriptor:
   document (e.g. markup language document) including information about server-side modifications of server-data that require a client-side refresh of the corresponding client-data for a specific layout document.
browser cache:
   memory area of a client; managed by a browser that is running on the client.
object data:
   data relating to an application (e.g. customer number, address, phone number, etc.).
layout data:
   data being used for configuration of a layout document.
document object model:
   According to the corresponding W3C definition, the Document Object Model (DOM) provides a mechanism to access and manipulate parsed HTML and XML content.

According to the present invention method and system are provided to solve the technical problem with the following features:
A client refreshes client-data that are visualized by a browser running on the client.
   a) The client provides a predefined layout document and further provides predetermined client-data that are stored in a client-data cache. The client-data cache stores client-data in a browser independent format. The layout document uses the client-data via a plurality of predefined client-side application independent functions.
   b) The client receives a sync-request to synchronize the predetermined client-data with corresponding server-data of a server.
   c) The client creates a client-data descriptor. The client data-descriptor has a browser independent format.
   d) The server generates a server-data descriptor that is dependent on the client-data descriptor, a server-side copy of predefined client-data and the server-data. The server-data descriptor has a browser independent format.
   e) The client updates the predetermined client-data in the client-data cache according to the server-data descriptor.
      Further, optional features are:
   f) The client compares the server-data descriptor with the client-data descriptor to select a corresponding layout document.
   g) The client applies the updated client-data to the corresponding layout document.

A further embodiment of the present invention is in the form of at least two complementary computer program products. A first computer program product includes instructions to cause the server to operate according to the invention as expressed in steps a) to g). The second computer program product includes instructions to cause the client to operate according to the present invention as expressed in steps a) to g).

An advantage of the present invention is that server-side generated application code is independent from the client-side browser. Therefore, a deliberate browser running on a deliberate client-side operating system can be used for visualization of the interface document. As a result, there is no need for multiple B/OS-specific implementations of application code. This implies a single version of multiple-B/OS-compatible application code on the server, whereas in prior art systems multiple-B/OS-specific versions of application code are created on the server.

A further advantage of the present invention is that server-side application code is independent from the client-side context of application data within a document. That is, access to client-data is managed by client-side functions that are independent of specific application code. Therefore, the same client-data can be used by multiple documents corresponding to multiple applications. This reduces the size of memory space on the client that is allocated to client-data because it avoids redundant storage of the same client-data for multiple documents.

A further advantage of the present invention is that the required network communication bandwidth for refreshing client-data is lower than in prior art systems where the full page (including layout description) is exchanged instead of a client-data descriptor.

A further advantage of the present invention is a flicker-free display of a client-side graphical human interface when client-data are refreshed. This is achieved by an in-memory replacement of the document object model of a layout document. A person of skill in the art can provide appropriate means.

The aspects of the invention will be implemented by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of the inventive computer system;
- FIG. 2: illustrates a visualization of an interface document at three consecutive points in time;
- FIG. 3: illustrates details of the inventive computer system at two consecutive points in time;
- FIG. 4: illustrates details of a mechanism to generate client-data increments;
- FIG. 5: illustrates a simplified flowchart of a computer-implemented method according to the present invention;
- FIG. 6: illustrates details of the inventive computer system when operated according to a further computer-implemented method of the present invention;
- FIG. 7: illustrates a simplified flowchart of the further computer-implemented method according to the present invention; and
- FIG. 8: illustrates the interaction of two complementary computer program products to operate a server and a client according to the present invention.

### Detailed Description of the Invention

Wherever possible, the same reference numbers will be used throughout the drawings to refer to the same or like parts. For convenience of explanation a list of references is provided prior to the claims.

Client-data 150 in the following figures, collectively stand for client-data at different points in time T0, T1, ... Tn. In the following description, client-data 150 referring to a corresponding point in time are referred to as 150-T0, 150-T1, ... 150-Tn. Copy 150' of client-data 150 uses the same notation.

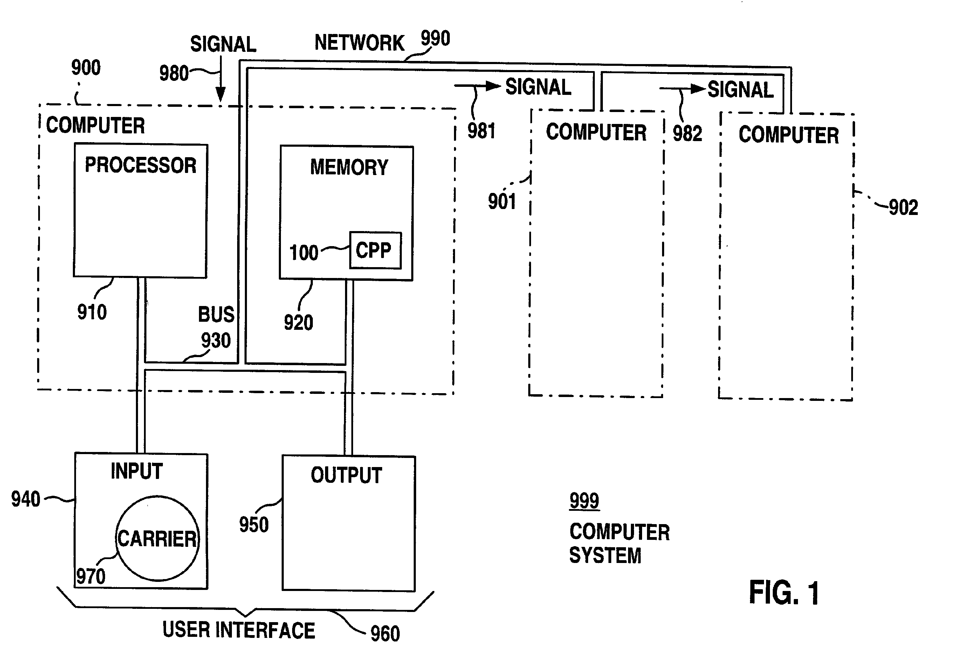

FIG. 1 illustrates a simplified block diagram of the inventive computer network system 999 having a plurality of computers 900, 901, 902 (or 90q, with q=0...Q-1, Q any number) .

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

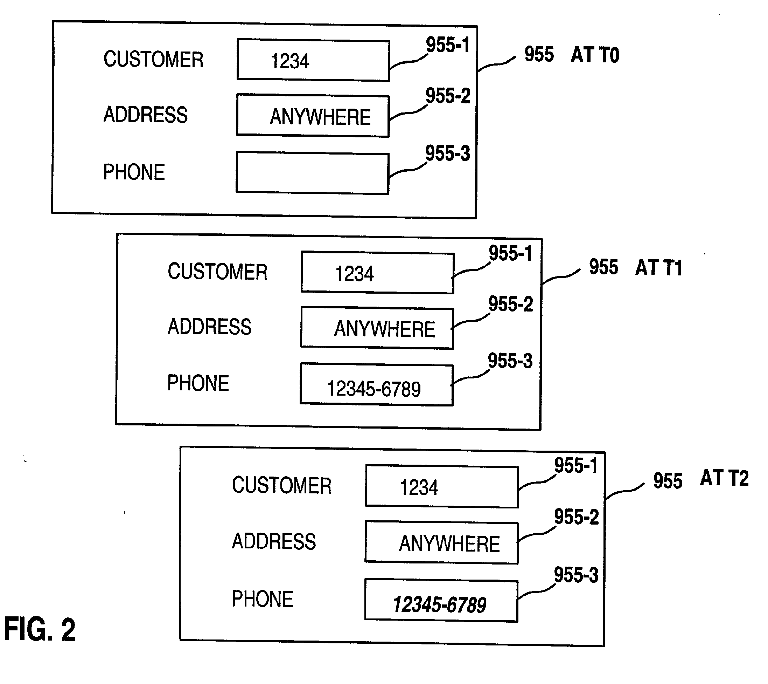

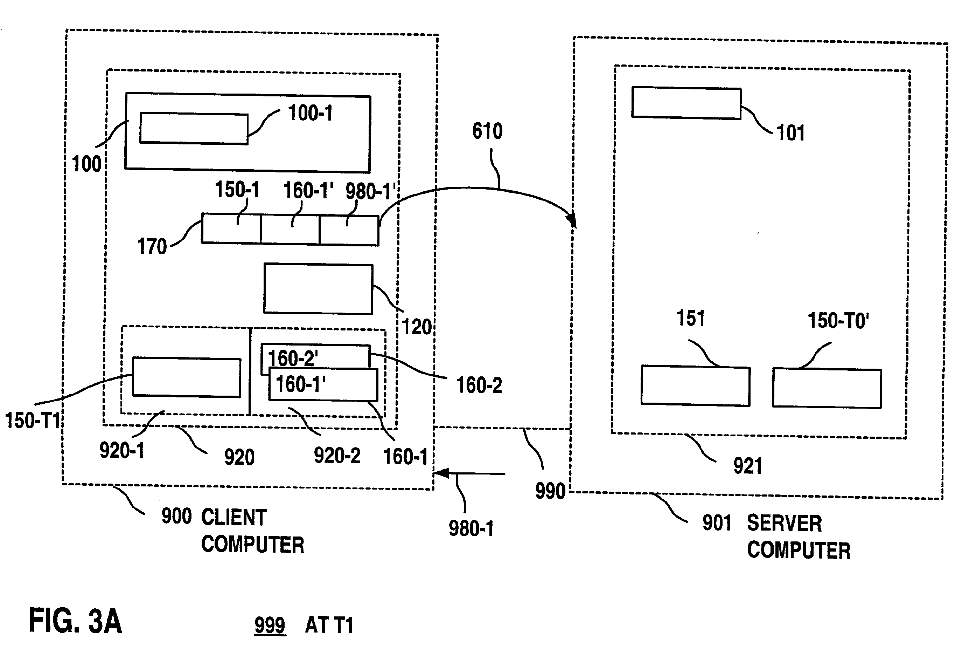

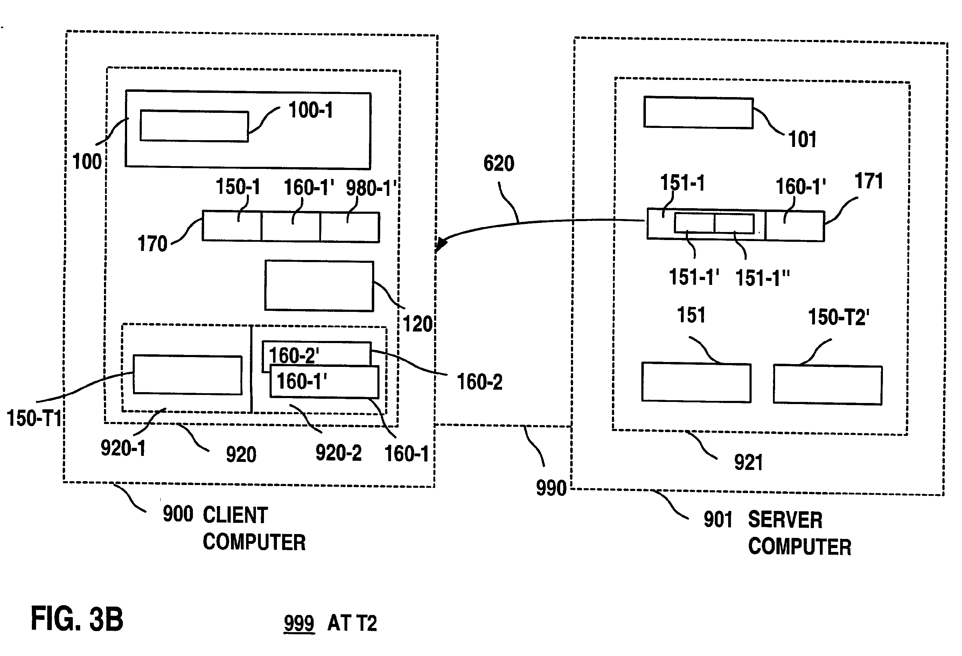

FIG. 2 illustrates at three consecutive time points T0, T1, T2 graphical human interface 955 that corresponds to a visualization of an interface document. Graphical human interface 955 includes layout elements, such as data entry fields 955-1 to 955-3. Visual attributes, such as position or colour of a layout element are determined by a layout document (e.g. 160-1, 160-2; cf. FIG. 3).

For explaining the present invention, the following exemplary scenario is convenient:

A user (not shown) interacts with client 900 (cf. FIG. 1) via user interface 960 (cf. FIG. 1). Client 900 visualizes graphical human interface 955. Human interface 955 prompts the user with layout elements that correspond to application data entry fields 955-1 to 955-3. The layout elements are arranged in a predefined order. Field 955-1 corresponds to a customer number, field 955-2 to the customer address and 955-3 to the customer phone number. As used hereinafter, quotation marks span values of data entry fields.

At T0, customer field 955-1 has predefined value "1234" and address field 955-2 has predefined value "ANYWHERE". For example, an application server (e.g. server 901, cf. FIG. 1) provides these values (application data) to client 900. Phone number field 955-3 has no predefined value.

At T1, the user enters the value "12345-6789" into phone number field 955-3.

At T2, client 900 prompts the user with the entered phone number value "12345-6789" in field 955-3 in a modified layout format. In the example, the phone number value is presented in italics but any other change in layout format, such as a different colour or an animation (e.g. blinking) is equivalent. The modified layout format indicates to the user that, for example, the phone number value "12345-6789" was entered in a wrong format and needs to be corrected (e.g. the application requires a slash instead of a dash, i.e. "12345/6789" instead of "12345-6789").

According to the present invention the above described scenario is based on a client-side separation of application data (client-data) and layout information (layout document) and is further based on a low-bandwidth data exchange mechanism between client 900 and server 901. A preferred implementation of computer system 999 (cf. FIG. 1) that operates according to the present invention is described in FIG. 3.

FIG. 3 illustrates details of the inventive computer system 999 at two consecutive time points T1 (FIG. 3A), T2 (FIG. 3B). Hardware components of computer system 999 are illustrated by dashed frames/lines and software components are illustrated by solid frames/lines. Method steps are illustrated by bended arrows.

Client 900 has memory 920. Memory 920 has at least client-data cache 920-1 and browser cache 920-2. Client-data cache 920-1 stores client-data 150 (application data) and browser cache 920-1 stores at least layout document 160-1, and optionally further layout document 160-2. Each layout document 160-1, 160-2 has a unique layout-ID 160-1', 160-2', respectively. Client-data cache 920-1 has a format that can be read by any browser 120 running on client 900 independent of the client's operating system (not shown). In a preferred embodiment, client-data cache 920-1 stores client-data 150 as an XML document.

For convenience of explanation, header information is left out from the coding examples that are shown in the following tables. A person skilled in the art can complement the given coding examples with the necessary header information (e.g. declarative statements for namespaces, etc.).

Table 1 shows an XML example of client-data 150-T0 in client-data cache 920-1 at T0 according to the example of FIG. 2. XML-tags (nodes) <...> and </...> indicate start and end of a specific storage section of client-data cache 920-1. An abbreviated notation for start and end tag is <... />. The following line numbers refer to table 1.

Lines 1 and 8 indicate start and end of a storage section in client-data cache 920-1, where information about customers is stored. Lines 2 and 7 indicate start and end of a record for customer "1234" that corresponds to the value of entry field 955-1 (cf. FIG. 2). Lines 3 and 6 indicate a section where further customer attributes are stored for said customer. Line 4 stores the customer's address "ANYWHERE" that corresponds to the value of entry field 955-2 as value attribute of the <ADDRESS /> tag.

**Table 1:**

| XML example of predefined client-data 150-T0 stored in client-data cache 920-1 at T0 | |
|---|---|
| **line** | **XML** |
| 1 | <CUSTOMER> |
| 2 | <RECORD id="1234"> |
| 3 | <PROPS> |
| 4 | <ADDRESS value="ANYWHERE" /> |
| 5 | ... |
| 6 | </PROPS> |
| 7 | </RECORD> |
| 8 | </CUSTOMER> |

It is an advantage of the present invention that the hierarchical data structure in client-data cache 920-1 allows application data storage that is free of redundancies, because the storage location of a value, such as the address value "ANYWHERE" is uniquely defined within the XML-tag hierarchy. Therefore, any layout document (e.g. 160-1, 160-2) can access the same application data (e.g. address value of entry field 955-2, cf. FIG. 2) via a unique path (e.g. "//CUSTOMER/RECORD/PROPS/ADDRESS") that is defined, for example, by corresponding XML-tags.

Layout document 160-1 uses client-data 150. Collectively, layout document 160-1 and client-data 150 are referred to as interface document. It is an advantage of the present invention that layout document 160-1 is separated from client-data 150, which allows a refresh of client-data 150 without refreshing layout document 160-1.

For example, initially (e.g. at T0, not shown), predefined layout document 160-1 and predefined client-data 150-T0 (not shown) are independently loaded from server 901 via network 990. Client-data 150-T0 are stored in client-data cache 920-1 and predefined layout document 160-1 is stored in browser cache 920-2. Layout document 160-1 uses client-data 150 via a plurality of predefined client-functions 100-1 (e.g. JAVA-Script functions) stored in memory 920. The predefined client-functions 100-1 are part of CPP 100 and are not related to application coding but can be considered as an independent framework to access client-data 150. It is not important, how the client-functions 100-1 are loaded into the client's memory 920. For example, they can be loaded from server 901 together with layout document 160-1.

Table 2 shows an example of an application independent JAVA-Script function to update a value in client-data cache 920-1. The following line numbers refer to table 2. Referring back to the example of FIG. 2, when the user adds the customer's phone number in entry field 955-3, line 1 of the function UpdateAttribute is called with the corresponding parameters:
strType=PROPS,
strProp=PHONE and
strValue="12345-6789".

In line 2, variable propsNode is set to an XML node of type <PROPS> (cf. table 1). In line 3, variable propNode is set to node <PHONE> under the node <PROPS>. In line 4, the value attribute of the node <PHONE> is set to "12345-6789".

**Table 2:**

| example of an application independent JAVA-Script function for updating a value in client-data cache 920-1. | |
|---|---|
| **line** | **JAVA-Script coding** |
| 1 | function UpdateAttribute(strType,strProp,strValue) { |
| 2 | var propsNode=SelectXmlNode(strType); |
| 3 | var propNode = propsNode.selectSingleNode(strProp); |
| 4 | propNode.value=strValue;} |

The UpdateAttribute function in table 2 demonstrates the independency of any application data structure. Any application data structure is automatically mapped to the generic hierarchical data structure stored in client-data cache 920-1 (cf. table 1).

FIG. 3A illustrates computer system 999 at T1. The user has entered value "12345-6789" into phone number field 955-3 (cf. FIG. 2) and client 900 has added the new value of field 955-3 to predefined client-data 150-T0 resulting in predetermined client-data 150-T1.

Table 3 shows the XML example of client-data cache 920-1 at T1 according to the example of FIG. 2. The following line numbers refer to table 3.

Line 5 stores the added phone number value "12345-6789" of customer "1234" that corresponds to the value of entry field 955-3 (cf. FIG. 2) as value attribute .

**Table 3:**

| XML example of predetermined client-data 150-T1 stored in client-data cache 920-1 at T1 | |
|---|---|
| **line** | **XML** |
| 1 | <CUSTOMER> |
| 2 | <RECORD id="1234"> |
| 3 | <PROPS> |
| 4 | <ADDRESS value="ANYWHERE" /> |
| 5 | <PHONE value="12345-6789" /> |
| 6 | </PROPS> |
| 7 | </RECORD> |
| 8 | </CUSTOMER> |

Client 900 receives sync-request 980-1 to synchronize client-data 150-T1 with corresponding server-data 151 of server 901. Sync-request 980-1 can be triggered by user interaction, by any server or client in network 999 or by any other application (e.g. a web service). Sync-request 980-1 is triggered when client-data 150 in client-data cache 920-1 become obsolete or incomplete. For example, when the user selects a specific field of graphical user interface 955 (cf. FIG. 2), a corresponding function of plurality 100-1 can trigger sync-request 980-1 if the function is associated with the selected field.

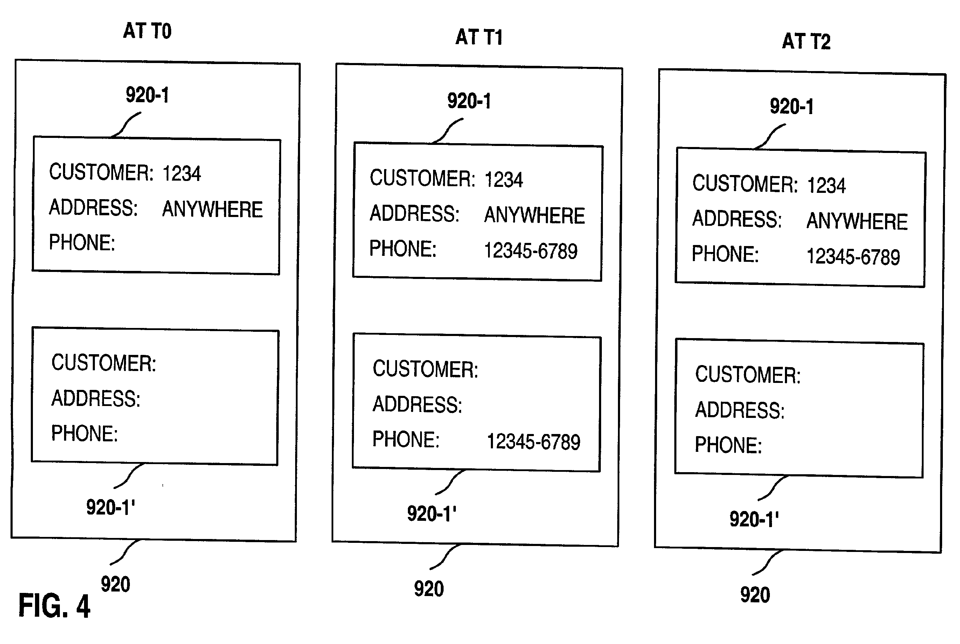

Preferably, sync-request 980-1 has request type 980-1' (cf. FIG. 4) that indicates the intention of sync-request 980-1 (e.g. back to a previous layout document; enter new data; etc.).

Upon having received sync-request 980-1, client 900 creates client-data descriptor 170. Client-data descriptor 170 is a data structure that has a browser independent format. Preferably, client-data descriptor 150-1 is a markup language document, such as an XML document. Client-data descriptor 170 includes request type 980-1' and layout-ID 160-1' of layout document 160-1, which is used by the interface document at T1 when sync-request 980-1 is received. Optionally, client-data descriptor 170 further includes the difference (client-data increment 150-1) between predefined client-data 150-T0 and predetermined client-data 150-T1. In the example, client-data increment 150-1 corresponds to table 3 but excluding line 4 because the address value was not modified. If predefined client-data 150-T0 were not changed by the time when sync-request 980-1 is received, client-data increment 150-1 is empty. An advantage of the present invention is the low bandwidth that is needed for sending 610 client-data descriptor 170 to server 901 because only client-data increment 150-1 is included instead of predetermined client-data 150-T1 and only layout-ID 160-1' is included instead of layout document 160-1.

At T1, server 901 stores copy 150-T0' of predefined client-data 150-TO in memory 921. Further, server 901 provides server-data 151 that are to be synchronized with predetermined client-data 150-T1. Preferably, server-data 151 are stored in memory 921 or reside on a further computer (e.g. computer 902, cf. FIG. 1) of computer system 999. A person skilled in the art knows how to provide server-data 151 via server 901, even when the data are stored elsewhere. CPP 101 causes server 901 to operate according to the present invention as described in FIG. 3B.

FIG. 3B illustrates computer system 999 at T2. After server 901 has received client-data descriptor 170, server 901 adds client-data increment 150-1 to copy 150-T0' resulting in intermediate copy 150-T1' (not shown) that corresponds to predetermined client-data 150-T1.

Server 901 then generates server-data descriptor 171, which is now explained in detail:

Server 901 provides server-data 151 according to request type 980-1' and corresponding layout-ID 160-1' of client-data descriptor 170. For example, the server executes a corresponding application to generate or retrieve server-data 151. Server 901 determines server-data increment 151-1 that corresponds to the difference of server-data 151 and copy 150-T1'. Preferably, server-data increment 151-1 comprises object data 151-1' (.e.g. phone number) and layout data 151-1'' (e.g. phone number font: italic - or phone number display colour: red, because phone number was entered by the user in an inappropriate format; cf. FIG. 2).

Dependent on the sync-request type 980-1' of client-data descriptor 170 server 901 determines an updated layout-ID (e.g. 160-1'). The updated layout-ID 160-1' equals the layout-ID 160-1' of client-data descriptor 170, if sync-request 980-1 triggers a refresh of the client-data 150-T1 used by the predefined layout document 160. However, the updated layout-ID is different (e.g. 160-2'), if the sync-request 980-1 triggers a refresh of client-data that require a further layout document 160-2 for display to the user. In the example of FIG. 2. updated layout-ID 160-1' still corresponds to layout document 160 that is used by client 900 at T1 because the user is prompted with the same graphical human interface 955 for phone number correction as for phone number entry.

In a further example, the user enters a value into phone number field 955-3 and further data are modified automatically by an application (e.g. the customer location depending on the country/area code of the phone number). In case the application determines to indicate the modified data to the user or in case the application determines that the phone number entry requires further entries by the user (e.g. a contact person for the phone number), server 901 sets the updated layout-ID to 160-2', because further layout document 160-2 includes corresponding further fields (not shown).

Server 901 further determines server-data increment 151-1 as the difference between intermediate copy 150-T1' and server-data 151. Advantageously, server 901 updates intermediate copy 150-T1' with server-data increment 151-1 resulting in anticipated copy 150-T2' that corresponds to the anticipated state of client-data 150 at T2. Advantageously, server-data increment 151-1 includes object data 151-1' and layout data 151-1''.

Server 901 generates server-data descriptor 171 in a browser independent format, such as an XML document. Server-data descriptor 171 corresponds to a data structure that includes the updated layout-ID (e.g. 160-1') and server-data increment 151-1. When sending 620 server-data descriptor 171 to client 900, low bandwidth for data transmission via network 990 is required for the same reasons as explained earlier for client-data descriptor 170.

Advantageously, client-data descriptor 170 and server-data descriptor 171 use the same hierarchical data structure (e.g. XML paths) as client-data 150 in client-data cache 920-1 (cf. table 1). That is, when server 901 receives client-data descriptor 170, client-data increment 150-1 communicates to server 901 the status of data paths and values (navigation status) with respect to client-side modifications. In case request-type 980-1' leads to a server-side event that results in a new navigation status for client 900 (e.g. a new layout document using client-data), server-data increment 151-1 communicates the new navigation status to client 900. Therefore, both, server 901 and client 900 always know the navigation status of client 900.

At T2, after having received server-data descriptor 171, client 900 updates client-data 150-T1 in client-data cache 920-1 according to server-data descriptor 171 resulting in updated client-data 150-T2. Updated client-data 150-T2 include the information of server-data increment 151-1 for layout document 160-1 that is specified via the updated layout-ID 160-1' of server-data descriptor 171. In the example of table 4, object data 151' are stored in the value attribute of line 5, whereas layout data 151-1'' (italic font for phone number display) are stored in the style attribute.

**Table 4:**

| XML example of updated client-data 150-T2 stored in client-data cache 920-1 at T2 | |
|---|---|
| **line** | **XML** |
| 1 | <CUSTOMER> |
| 2 | <RECORD id="1234"> |
| 3 | <PROPS> |
| 4 | <ADDRESS value="ANYWHERE" /> |
| 5 | <PHONE value="12345-6789" style="font:'italic'" /> |
| 6 | </PROPS> |
| 7 | </RECORD> |
| 8 | </CUSTOMER> |

In an alternative implementation, only object-data 151-1' are used to update client-data cache 920-1 but layout data 151-1'' are stored intermediately in memory 920 until being processed by browser 120. The advantage of storing layout data 151-1'' outside of client-data cache 920-1 is to keep the cache 920-1 small and, therefore, enable faster access to client-data 150 than in a large client-data cache that also includes layout data. For example, in the alternative implementation layout data 151-1'' include a JAVA-Script function, (e.g. EInput_ctr1Phone.style="font:'italic'", wherein font is a style sheet class of Cascading Style Sheets defined in dynamic HTML) that refers to entry field 955-3 in the document object model (e.g. HTML-DOM) of layout document 160 and sets the font to 'italic'.

Advantageously, client 900 compares the updated layout-ID (e.g. 160-1' in the example) of server-data descriptor 171 with layout-ID (e.g. 160-1' in the example) of client-data descriptor 170.

If there is no difference (as in the example of FIG. 2), an in-memory replacement of the document object model of layout document 160 results in a flicker-free modification of the display of graphical human interface 955. That is, the visualization of client-data 150 (e.g. phone number value "1234-56789" in layout element entry field 955-3) on output device 950 (e.g. computer screen, cf. FIG. 1) changes without any impact on the visualization of other layout elements (e.g. 955-1, 955-2) of graphical human interface 955. The user does not notice any screen flicker and, therefore, has the impression of a flicker-free exchange of the corresponding layout element (e.g. entry field 955-3).

If there is a difference (e.g. updated layout-ID equals 160-2'), client 900 loads the layout document (e.g. 160-2) that corresponds to the updated layout-ID from browser cache 920-2. In case, the corresponding layout document is not available in browser cache 920-2, client 900 loads the corresponding layout document from server 901 of from a further computer (e.g. 902) in computer system 999.

In the example of FIG. 2, object data 151-1' are empty (no application data are modified) but layout data 151-1'' include layout information to display the phone number value in field 955-3 in an italics font.

Client 900 applies updated client-data 150-T2 to the corresponding layout document 160.

In a first implementation, client 900 applies updated client-data 150-T2 to layout document 160 via JAVA-Script functions, such as:
EInput_ctrlPhone.value="12345-6789";
EInput_ctrlPhone.style="font:'italic'" ;
   by referencing the document object model of layout document 160.

In a second implementation, client 900 applies updated client-data 150-T2 to layout document 160 via a style sheet language transformation, such as XSLT. The following line numbers refer to table 5. Lines 1, 8 reference entry field 955-3 (PHONE) in the document object model of layout document 160. Lines 2, 3 and 4 include XSL instructions to apply the value attribute of node <PHONE> of updated client-data 150-T2 (cf. table 4) to entry field 955-3. Lines 5, 6 and 7 include XSL instructions to apply the style attribute of node <PHONE> of updated client-data 150-T2 to entry field 955-3.

**Table 5:**

| example of applying updated client-data 150-T2 (cf. table 4) to layout document 160 via XSLT. | |
|---|---|
| **line** | **XML** |
| 1 | <INPUT id="EInput_ctrlPhone"> |
| 2 | <xsl:attribute name="value"> |
| 3 | <xsl:value-of select="./PROPS/PHONE/@value" /> |
| 4 | </xsl:attribute> |
| 5 | <xsl:attribute name="style"> |
| 6 | <xsl:value-of select="./PROPS/PHONE/@style" /> |
| 7 | </xsl:attribute> |
| 8 | </INPUT> |

A person skilled in the art can combine the first and the second implementation by using an appropriate mix of JAVA-Script functions and XSL instructions.

At T2, browser 120 running on client 900 displays graphical human interface 955 (cf. FIG. 2) by using object data 151-1' of the updated client-data 150-T2 stored in the client-cache 920-1. Advantageously, layout data 151-1'' modify the visual appearance of corresponding layout document 160 (e.g. italic font).

FIG. 4 illustrates details of a mechanism to generate client-data increment 150-1 (cf. FIG. 3).

In a preferred implementation, memory 920 of client 900 further includes client-data increment buffer 920-1' having the same data structure as client-data cache 921-1. In the following description, client-data increment buffer 920-1' is referred to as buffer 921-1' and client-data cache 920-1 is referred to as cache 920-1. In the example, cache 920-1 and buffer 920-1' include storage locations to store a customer number <CUSTOMER>, a customer address <ADDRESS> and the customer's phone number <PHONE>.

Referring again to the example of FIG. 2, at T0 graphical human interface 955 prompts the user with the customer number value "1234" and the customer's address value "ANYWHERE", which are both stored as predefined client-data 150-TO at the corresponding storage locations <CUSTOMER> and <ADDRESS> in cache 920-1. Buffer 120-1' has no values stored at T0.

At T1, after client 900 has received the phone number value "12345-6789" via user interface 960 (cf. FIG. 1), the phone number value is stored at the corresponding storage location <PHONE> of cache 920-1. Substantially simultaneously, client 900 stores the phone number value as value attribute at the corresponding storage location <PHONE> of buffer 920-1'. Therefore, the storage content of buffer 920-1' corresponds to client-data increment 150-1 and can be attached to client-data descriptor 170. A person skilled in the art knows how to further compress the content of buffer 920-1' before attaching it to client-data descriptor 170 to save bandwidth.

It is an advantage of the present invention that client-data increment 150-1 is available immediately after a modification of client-data 150 (e.g. predefined client-data 150-T0) without a further need for scanning cache 920-1.

Advantageously, when the current layout document (e.g. 160-1, cf. FIG. 3) in the browser 120 is replaced by a further layout document (e.g. 160-2, cf. FIG. 3) while a value is stored in buffer 920-1', client 900 generates a sync-request (e.g. 980-1). In this case, client 900 can automatically compose client-data descriptor 170 and send it to server 901.

Preferably, when client 900 sends 430 client-data descriptor 170 to server 901, all values are deleted from buffer 920-1'. Alternatively, the deletion can occur at any time between T1 and T2. At T2, buffer 920-1' has no values stored and is ready to trace further modifications to client-data 150-T2 (cf. FIG. 3B).

A person skilled in the art can provide alternative implementations generating client-data increment 150-1. For example, values that are modified in cache 920-1 can be flagged with a modification flag (not shown). When sync-request 980-1 is received, client 900 scans cache 920-1 to collect all storage locations that store values having a modification flag. Then, client 900 generates client-data increment 150-1 using the collected storage locations and the corresponding values.

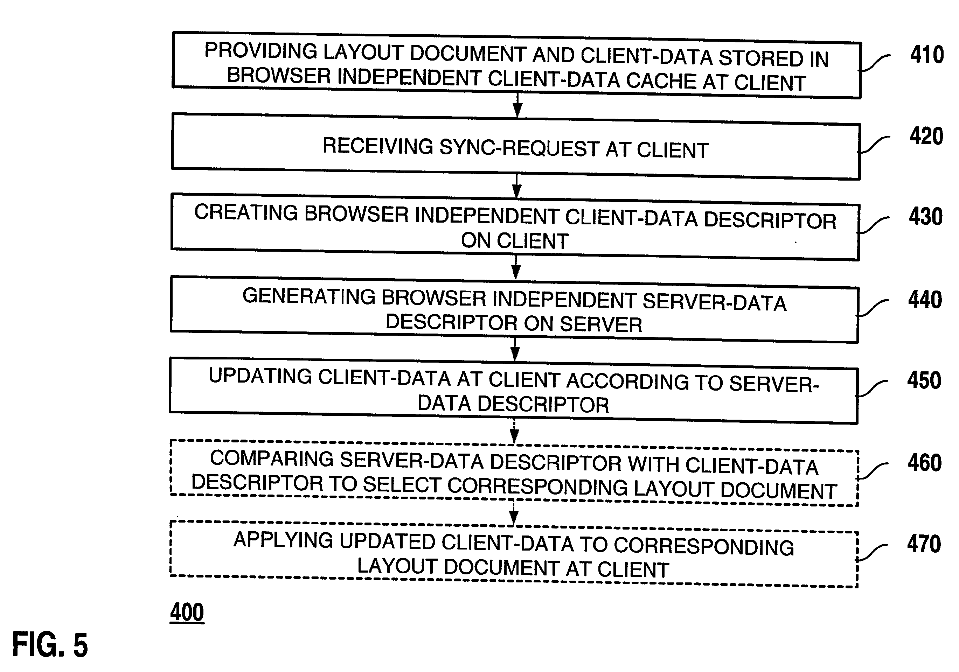

FIG. 5 illustrates a simplified flowchart of computer-implemented method 400 according to the present invention. Optional method steps are illustrated by dashed frames/lines.

Computer-implemented method 400 is for refreshing client-data 150 (cf. FIG. 3) used by the client-side interface document. The client-side interface document is processed by browser 120, which is running on client 900 (cf. FIG. 3). Method 400 comprises the following steps:
providing 410, receiving 420, creating 430, generating 440 and updating 450. Method 500 optionally comprises the further steps comparing 470 and applying 480. The steps are now explained in detail.

In the providing step 410, client 900 (cf. FIG. 3) provides client-side predefined layout document 160-1 (cf. FIG. 3) and predetermined client-data 150-T1 (cf. FIG. 3). Predetermined client-data 150-T1 are stored in client-data cache 920-1. Client-data 150-T1 are stored in a browser independent format (e.g. XML document). Advantageously, layout document 160-1 is stored in browser cache 920-2 and uses predetermined client-data 150-T1 via a plurality of predefined client-side application independent functions 100-1.

In the receiving step 420, client 900 receives sync-request 980-1 to synchronize predetermined client-data 150-T1 with corresponding server-data 151 (cf. FIG. 3) of server 901 (cf. FIG 3). Advantageously, sync-request 980-1 has request type 980-1' for categorizing sync-request 980-1.

In the creating client-data descriptor step 430, client 900 creates client-data descriptor 170 (cf. FIG. 3) in a browser independent format, such as XML. Advantageously, client-data descriptor 170 includes request type 980-1', layout-ID 160-1' (cf. FIG. 3) representing layout document 160-1 and client-data increment 150-1 (cf. FIG. 3).

In the generating step 440, server 901 generates server-data descriptor 171 (cf. FIG. 3) dependent on client-data descriptor 170, server-side copy 150-T0' (cf. FIG. 3) of predefined client-data 150-T0 and server-data 151. Server-data descriptor 171 has a browser independent format (e.g. XML document). Advantageously, server 901 stores copy 150-T1' (cf. FIG. 3) of predetermined client-data 150-T1 by combining client-data increment 150-1 with copy 150-T0' of predefined client-data 150-T0. Advantageously, server-data descriptor 171 includes an updated layout-ID (e.g. 160-1', 160-2') and server-data increment 151-1. Advantageously, server-data increment 151-1 comprises object data 151-1' and layout data 151-1''. Advantageously, server 901 further creates server-side copy 150-T2' that corresponds to updated client-data 150-T2 by using server-data increment 151-1 and copy 150-T1' of predetermined client-data 150-T1.

In the updating step 450, client 900 updates predetermined client-data 150-T1 in client-data cache 920-1 according to server-data descriptor 171 by using server-data increment 151-1 (cf. FIG. 3). As a result of the updating step 460, updated client-data 150-T2 are stored in client-data cache 920-1. In one implementation, updated client-data 150-T2 include object data 151-1' and layout data 151-1''. In another implementation, updated client-data 150-T2 include object data 151-1' but layout data 151-1'' are intermediately stored in a separate portion (not shown) of memory 920.

In the optional comparing step 460 client 900 compares server-data descriptor 171 with client-data descriptor 170 to select a corresponding layout document 160-1, 160-2. The selection is performed by using updated layout-ID (e.g. 160-1', 160-2'; cf. FIG. 3) that is included in server-data descriptor 171.

In the optional applying step 470, client 900 applies updated client-data 150-T2 to the corresponding layout document (e.g. 160-1, 160-2). Advantageously, the applying step 480 is performed by executing a corresponding JAVA-Script function or an XSL-Transformation (XSLT) on updated client-data 150-T2. In case, server-data increment 171 includes object-data 151-1', the corresponding, modified field values are visualized via human graphical interface 955 (cf. FIG. 2). In case, server-data increment 171 further includes layout-data 151-1'', the display of a layout element of human graphical interface 955 is adjusted, accordingly. In the example of FIG. 2, layout-data 151-1'' include an instruction to change the font of the phone-number value in entry field 955-3 (cf. FIG. 2) to italic.

Advantageously, the corresponding layout document (e.g. 160-1, 160-2) has a document object model and in the applying step 470 client 900 performs an in-memory replacement of the document object model. The advantage is a flicker-free visualization of updated client-data 151-T2 via human graphical interface 955.

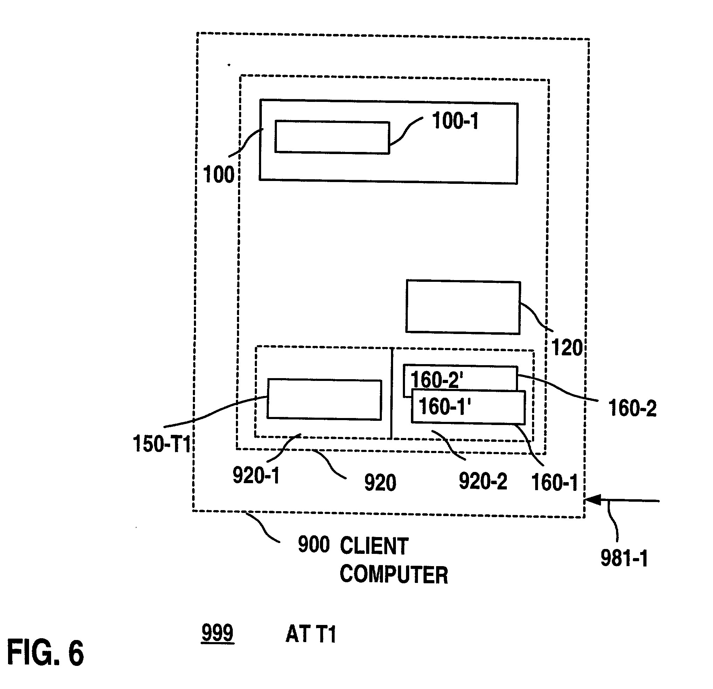

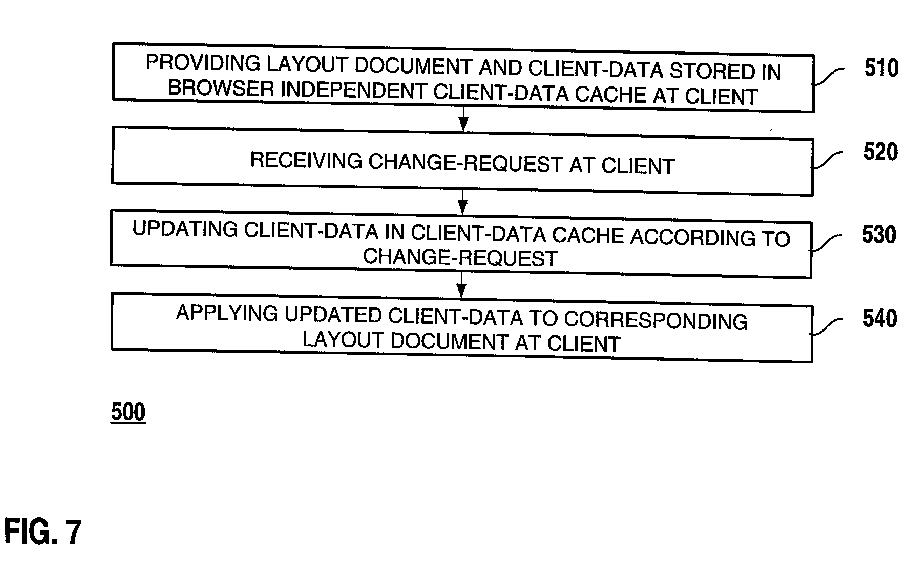

FIG. 6 illustrates details of inventive computer system 999 at time point T1, when operated according to further computer-implemented method 500 (cf. FIG. 7) of the present invention.

In this implementation computer system 999 includes at least client 900. As described under FIG. 3, client 900 includes memory 920, which includes at least client-data cache 920-1 and browser cache 920-2. Client-data cache 920-1 stores client-data 150 and browser cache 920-2 stores at least layout document 160-1 and, optionally, further layout document 160-2.

Client-data 150 are to be refreshed when client 900 receives change-request 981-1. Change-request 981-1 can be triggered by user interaction, by any server or client in network 999 or by any other application (e.g. a web service). For example, when the user modifies the value of a specific field (e.g. 955-1 to 955-3, cf. FIG. 2) of graphical user interface 955 (cf. FIG. 2), a corresponding function of plurality 100-1 can trigger change-request 981-1 if the function is associated with the selected field.

Each layout document has a corresponding layout-ID (e.g. 160-1', 160-2', respectively).

Memory 920 further stores browser 120 and CPP 100. CPP 100 includes a plurality of predefined client-side application independent functions 100-1.
FIG. 7 illustrates a simplified flowchart of further computer-implemented method 500 according to the present invention. Method 500 describes the refresh of client-data 150 (cf. FIG.3) when no interaction between client 900 and server 901 is needed. Client-data 150 are used by client-side layout document (e.g. 160-1, cf. FIG. 3) and stored in client-data cache 920-1 (cf. FIG. 3).

The interface document is processed by browser 120 (cf. FIG. 3) running on client 900 (cf. FIG. 3). Method 500 comprises the following steps: providing 510, receiving 520, updating 530 and applying 540. The steps are now explained in detail.

In the providing step 510, client 900 provides predefined layout document 160-1 (cf. FIG. 3) and predetermined client-data 150-T1. Client-data 150 are stored in client-data cache 920-1 in a browser independent format, such as XML. Layout document 160-1 uses client-data 150-T1 via a plurality of predefined client-side application independent functions 100-1 (e.g. JAVA-Script functions).

In the receiving step 520, client 900 receives change-request 981-1 to change predetermined client-data 150-T1 into updated client-data 150-T2 (not shown) according to change-request 981-1. For example, change-request 981-1 indicates a modification of the phone number value "1234-56789" in entry field 955-3 (cf. FIG. 2) into value "9876-54321".

The updating step 530 is performed in case that change-request 981-1 can be processed by client 900 without synchronizing client-data cache 920-1 with a further computer (e.g. server 901). Client 900 updates 530 predetermined client-data 150-T1 in client-data cache 920-1 according to change request 981-1. For example, the phone number value "1234-56789" stored at a corresponding location in client-data cache 920-1 is changed into value "9876-54321".

In the applying step 540, client 900 applies updated client-data 150-T2 to layout document 160-1. Advantageously, client 900 applies updated client-data 150-T2 to layout document 160-1 via a JAVA-Script function or via a style sheet language transformation (XSLT).

Advantageously, layout document 160-1 has a document object model and client 900 performs an in-memory replacement of the document object model in the applying step 540. The advantage is a flicker-free visualization of updated client-data 151-T2 via human graphical interface 955.

After having described the present invention as computer system 999 and computer-implemented methods 400, 500, it will now be described as complementary computer program products 100, 101 (cf. FIG. 3), wherein each computer program product is embodied by a computer readable medium (e.g. data carrier 970, 971, cf. FIG. 1) or carried by a signal (e.g. signal 982, cf. FIG. 1).

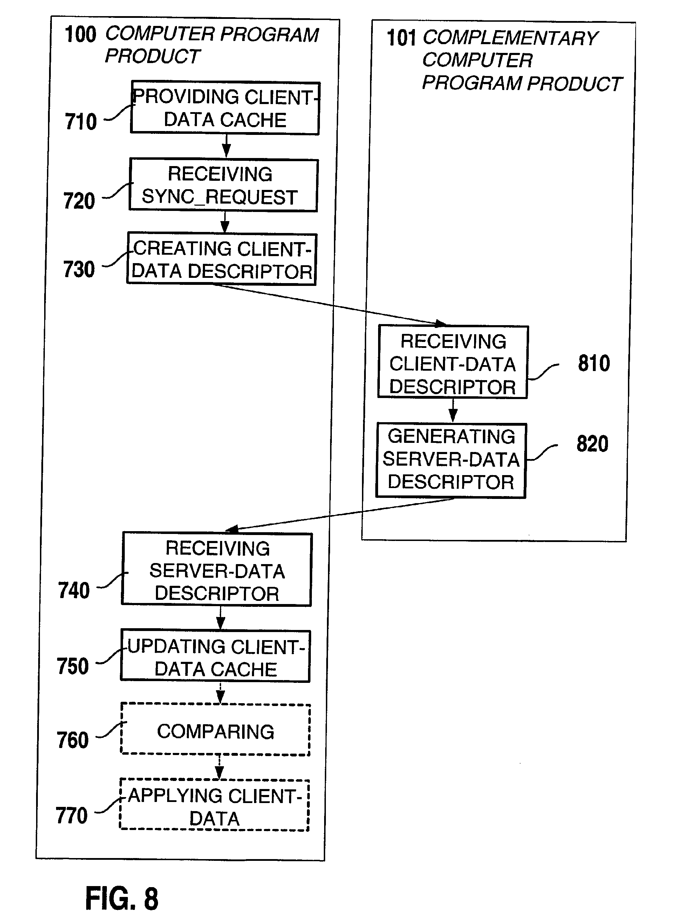

FIG. 8 illustrates the interaction of two complementary computer program products 100, 101 to operate at least client 900 and server 901 according to the present invention.

Each frame 710-770, 810-820 indicates a program step in the flow of the corresponding computer program and stands for a plurality of instructions that cause a processor 910, 911 (cf. FIG. 1) of the corresponding computer 900, 901 (cf. FIG. 1) to execute the program step. The arrows between the frames indicate the program flow. Arrows pointing from one CPP to another CPP indicate an interaction (exchange of data) between the two complementary CPPs. Optional parts of a computer program product are illustrated by dashed frames/lines.

Computer program product 100 has a plurality of instructions for causing at least one processor 910 of client 900 to refresh client-data 150 stored in client-data cache 920-1. Computer program product 100 causes client 900 to execute the following steps:

Providing 710 predefined layout document 160-1 and predetermined client-data 150-T1 that are stored in the client-data cache 920-1. Providing step 710 is equivalent to providing step 410 of method 400.

Receiving 720 sync-request 980-1 to synchronize predetermined client-data 150-T1 with corresponding server-data 151 of server 901. Receiving step 720 is equivalent to receiving step 420 of method 400.

Creating 730 client-data descriptor 170 having a browser 120 independent format. Creating step 730 is equivalent to creating step 430 of method 400.

Receiving 740 from server 901 server-data descriptor 171. Server-data descriptor 171 was generated 440 (cf. FIG. 5) by server 901 (cf. FIG. 3) dependent on client-data descriptor 170 and server-side copy 150-T0' of predefined client-data 150-T0 and server-data 151. Server-data descriptor 171 has a browser 120 independent format.

Updating 750 predetermined client-data 150-T1 in client-data cache 920-1 according to server-data descriptor 171. Updating step 750 is equivalent to updating step 450 of method 400.

Optionally, computer program product 100 causes client 900 to execute the further steps:

Comparing 760 server-data descriptor 171 with client-data descriptor 170 to select a corresponding layout document 160-1, 160-2. Comparing step 760 is equivalent to comparing step 460 of method 400.

Applying 770 updated client-data 150-T2 to the corresponding layout document 160-1, 160-2. Applying step 770 is equivalent to applying step 470 of method 400. Advantageously, the corresponding layout document 160-1, 160-2 has a document object model (not shown) and applying step 770 comprises an in-memory replacement of the document object model. Advantageously, client 900 applies updated client-data 150-T2 to corresponding layout document 160-1, 160-2 via a JAVA-Script function or via a style sheet language transformation.

Complementary computer program product 101 has a plurality of instructions for causing at least one processor 911 of server 901 to assist client 900 to refresh client-data 150 stored in client-data cache 920-1 with respect to corresponding server-data 151. Complementary computer program product 101 causes server 901 to execute the following steps:

Receiving 810 from client 900 client-data descriptor 170 having a browser 120 independent format. Client-data descriptor 170 was created by client 900 according to creating step 430 of method 400.

Generating 820 server-data descriptor 171 dependent on server-data 151 and client-data descriptor 170 and server-side copy 150' of client-data 150. Server-data descriptor 171 has a browser (120) independent format. Generating step 820 is equivalent to generating step 440 of method 400.

| **Reference** | **Description** |
|---|---|
| 100/101 | Computer program product |
| 100-1 | Plurality of client-side application independent functions |
| 120 | Browser |
| 150, 150-xx | Client-data |
| 150', 150-xx' | Server-side copy of client-data |
| 150-1 | Client-data increment |
| 151 | Server-data |
| 151-1 | Server-data increment |
| 160-1, 160-2 | Layout document |
| 160-1', 160-2' | Layout-ID |
| 170 | Client-data descriptor |
| 171 | Server-data descriptor |
| 400, 500 | Method |
| 4xx, 5xx | Method steps |
| 999 | Computer network system |
| 900, 901, 902 | Computers |
| 910, 911, 912 | Processors |
| 920, 921, 922 | Memories |
| 920-1 | Client-data cache |
| 920-2 | Browser cache |
| 930 | Bus |
| 940 | Input device |
| 950 | Output device |
| 955 | Graphical human interface |
| 955-1 to 955-3 | Entry fields (layout elements) |
| 960 | User interface |
| 970 | Data carrier (computer readable medium) |
| 980-1 | Sync-request |
| 980-1' | Request type |
| 981-1 | Change-request |
| 990 | Computer network |
| 999 | Computer system |
| Reference numbers | |

## Claims

1. A computer-implemented method (400) for refreshing client-data (150) that are visualized by a browser (120) running on a client (900); the method comprising the following steps:
providing (410) at the client (900) a predefined layout document (160-1) and predetermined client-data (150-T1); the predetermined client-data (150-T1) stored in a client-data cache (920-1) in a browser independent format; the layout document (160-1) using the predetermined client-data (150-T1) via a plurality of predefined client-side application independent functions (100-1);
receiving (420) at the client (900) a sync-request (980-1) to synchronize the predetermined client-data (150-T1) with corresponding server-data (151) of a server (901);
creating (430) on the client (900) a client-data descriptor (170) having a browser independent format;
generating (440) on the server (901) a server-data descriptor (171) dependent on the client-data descriptor (170) and a server-side copy (150-T0') of predefined client-data (150-T0) and the server-data (151); the server-data descriptor (171) having a browser independent format; and
updating (450) on the client (900) the predetermined client-data (150-T1) in the client-data cache (920-1) according to the server-data descriptor (171).

2. The method of claim 1, wherein in the providing step (410), the client (900) stores the layout document (160-1) in a browser cache (920-2).

3. The method of claim 1, wherein in the receiving step (420), the sync-request (980-1) has a request type (980-1').

4. The method of claim 3, wherein in the creating step (430), the client-data descriptor (170) comprises the request type (980-1').

5. The method of claim 4, wherein, the client-data descriptor (170) further comprises a layout-ID (160-1') representing the layout document (160-1).

6. The method of claim 5, wherein, the client-data descriptor (170) further comprises a client-data increment (150-1).

7. The method of claim 1, wherein the client-data descriptor (170) is an extensible markup language (XML) document.

8. The method of claim 6, wherein in the generating step (440), the server stores a copy (150-T1') of the predetermined client-data (150-T1) by combining the client-data increment (150-1) with the copy (150-T0') of the predefined client-data (150-T0).

9. The method of claim 5, wherein in the generating step (440), the server-data descriptor (171) comprises an updated layout-ID (160-1', 160-2').

10. The method of claim 6, wherein in the generating step (440), the server-data descriptor (171) comprises a server-data increment (151-1).

11. The method of claim 10, wherein the server-data increment (151-1) comprises object data (151-1') and layout data (151-1'').

12. The method of claim 1, wherein the server-data descriptor (171) is an extensible markup language document.

13. The method of claim 10, wherein in the updating step (450), the client (900) uses the server-data increment (151-1) to update client-data (150-T2).

14. The method of claim 10, wherein in the generating step (440), the server (901) creates a server-side copy (150-T2') that corresponds to updated client-data (150-T2) by using the server-data increment (151-1) and the copy (150-T1') of the predetermined client-data (150-T1).

15. The method of claim 13, wherein the updated client-data (150-T2) comprise object data (151-1') and layout data (151-1'').

16. The method of claim 1 comprising the further steps:
comparing (460) at the client (900) the server-data descriptor (171) with the client-data descriptor (170) to select a corresponding layout document (160-1, 160-2); and
applying (470) at the client (900) the updated client-data (150-T2) to the corresponding layout document (160-1, 160-2).

17. The method of claim 16, wherein the corresponding layout document (160-1, 160-2) has a document object model and the applying step (470) comprises an in-memory replacement of the document object model.

18. The method of claim 16, wherein in the applying step (470), the client (900) applies the updated client-data (150-T2) to the corresponding layout document (160-1, 160-2) via a JAVA-Script function.

19. The method of claim 16, wherein in the applying step (470), the client (900) applies the updated client-data (150-T2) to the corresponding layout document (160-1, 160-2) via a style sheet language transformation.

20. A computer-implemented method (500) for refreshing client-data (150) that are visualized by a browser (120) running on a client (900); the method (500) comprising the following steps:
providing (510) at the client (900) a predefined layout document (160-1) and predetermined client-data (150-T1); the predetermined client-data (150-T1) being stored in a client-data cache (920-1) in a browser independent format; the layout document (160-1) using the client-data (150-T1) via a plurality of predefined client-side application independent functions (100-1);
receiving (520) at the client (900) a change-request (981-1) to change the predetermined client-data (150-T1) into updated client-data (150-T2) according to the change request (981-1);
updating (530) on the client (900) the predetermined client-data (150-T1) in the client-data cache (920-1) according to the change request (981-1); and
applying (540) at the client (900) the updated client-data (150-T2) to the layout document (160-1).

21. The method of claim 20, wherein the layout document (160-1) has a document object model and the applying step (540) comprises an in-memory replacement of the document object model.

22. The method of claim 20, wherein in the applying step (540), the client (900) applies the updated client-data (150-T2) to the layout document (160-1) via a JAVA-Script function.

23. The method of claim 20, wherein in the applying step (540), the client (900) applies the updated client-data (150-T2) to the layout document (160-1) via a style sheet language transformation.

24. A computer program product (100) embodied by a data carrier (970) or carried by a signal (982); the computer program product (100) having a plurality of instructions for causing at least one processor (910) of a client (900) computer to refresh client-data (150) stored in a client-data cache (920-1); the computer program product (100) causing the client (900) to execute the following steps:
providing (710) a predefined layout document (160-1) and predetermined client-data (150-T1); the predetermined client-data (150-T1) stored in the client-data cache (920-1) in a browser (120) independent format; the layout document (160-1) using the predetermined client-data (150-T1) via a plurality of predefined client-side application independent functions (100-1);
receiving (720) a sync-request (980-1) to synchronize the predetermined client-data (150-T1) with corresponding server-data (151) of a server (901) computer;
creating (730) a client-data descriptor (170) having a browser (120) independent format;
receiving (740) from the server (901) a server-data descriptor (171) dependent on the client-data descriptor (170) and a server-side copy (150-T0') of predefined client-data (150-T0) and the server-data (151); the server-data descriptor (171) having a browser (120) independent format; and
updating (750) the predetermined client-data (150-T1) in the client-data cache (920-1) according to the server-data descriptor (171).

25. The computer program product (100) of claim 24, causing the client (900) to execute the further steps:
comparing (760) the server-data descriptor (171) with the client-data descriptor (170) to select a corresponding layout document (160-1, 160-2); and
applying (770) the updated client-data (150-T2) to the corresponding layout document (160-1, 160-2).

26. The computer program product (100) of claim 25, wherein the corresponding layout document (160-1, 160-2) has a document object model and the applying step (770) comprises an in-memory replacement of the document object model.

27. The computer program product (100) of claim 25, wherein in the applying step (770), the client (900) applies the updated client-data (150-T2) to the corresponding layout document (160-1, 160-2) via a JAVA-Script function.

28. The computer program product (100) of claim 25, wherein in the applying step (770), the client (900) applies the updated client-data (150-T2) to the corresponding layout document (160-1, 160-2) via a style sheet language transformation.

29. A computer program product (101) embodied by a data carrier (971) or carried by a signal (982); the computer program product (101) having a plurality of instructions for causing at least one processor (911) of a server (901) computer to assist a client (900) computer to refresh client-data (150) stored in a client-data cache (920-1) with respect to corresponding server-data (151); the computer program product (101) causing the server (901) to execute the following steps:
receiving (810) from the client (900) a client-data descriptor (170) having a browser (120) independent format; and
generating (820) a server-data descriptor (171) dependent on the server-data (151) and the client-data descriptor (170) and a server-side copy (150') of the client-data (150); the server-data descriptor (171) having a browser (120) independent format.

30. A computer program product (100) embodied by a data carrier (970) or carried by a signal (982); the computer program product (100) having a plurality of instructions for causing at least one processor (910) of a client (900) computer to refresh client-data (150) stored in a client-data cache (920-1); the computer program product (100) causing the client (900) to execute the following steps:
providing (510) a predefined layout document (160-1) and predetermined client-data (150-T1); the predetermined client-data (150-T1) stored in the client-data cache (920-1) in a browser (120) independent format; the layout document (160-1) using the client-data (150-T1) via a plurality of predefined client-side application independent functions (100-1);
receiving (520) a change-request (981-1) to change the predetermined client-data (150-T1) into updated client-data (150-T2) according to the change request (981-1);
updating (530) the predetermined client-data (150-T1) in the client-data cache (920-1) according to the change request (981-1); and
applying (540) the updated client-data (150-T2) to the layout document (160-1).

31. The computer program product (100) of claim 30, wherein the layout document (160-1) has a document object model and the applying step (540) comprises an in-memory replacement of the document object model.

32. The computer program product (100) of claim 30, wherein in the applying step (540), the client (900) applies the updated client-data (150-T2) to the layout document (160-1) via a JAVA-Script function.

33. The computer program product (100) of claim 30, wherein in the applying step (540), the client (900) applies the updated client-data (150-T2) to the layout document (160-1) via a style sheet language transformation.

34. A client-data cache (920-1) for storing client-data (150) on a client (900); the client data (150) being used by a layout document (160-1) and being visualized by a browser (120) running on the client (900); the client-data cache (920-1) **characterized in that**:
the client-data (150) have a format that is independent of the browser (120) and the client's (900) operating system; and
the client-data (150) are stored in the client-data cache (920-1) are accessed by the layout document (160-1) via a plurality of predefined client-side application independent functions (100-1).

35. A client-data cache (920-1) for storing client-data (150) on a client (900); the client data (150) being used by a layout document (160-1) and being visualized by a browser (120) running on the client (900); the client-data cache (920-1) **characterized in that**:
the client-data (150) are stored in the client-data cache (190-1) as an extensible markup language (XML) document; and
the client-data (150) are stored in the client-cache (920-1) are accessed by the layout document (160) via a plurality of predefined client-side application independent functions (100-1).

36. A graphical human interface (955) of a client (900) computer for prompting a user with client-data (150) are used by a layout document (160-1), wherein the layout document (160-1) has a document object model; upon modification of the client-data (150) the client (900) executing an in-memory replacement of the document object model; the graphical human interface (955) **characterized in that**
the client-data (150) are stored in a client-data cache (920-1) according to claim 35.

37. A computer system (999) comprising at least a client (900) computer having a client-memory (920) and a server (901) computer having a server-memory (921); the client-memory (920) for storing a layout document (160-1) and further comprising a client-data cache (920-1) for storing client-data (150); the client data (150) being used by the layout document (160-1); the client-memory (920) further comprising a client program (100) for receiving a sync-request (980-1) to synchronize the client-data (150) with server-data (151) of the server (901); the computer system (999) **characterized in that**:
the client-data cache (190-1) stores client-data (150) in a format that is independent of the browser (120) and the client's (900) operating system;
the layout document (160) uses the client-data (150) via a plurality of predefined client-side application independent functions (100-1);
the client program (100) causes the client (900) to create (430) a client-data descriptor (170) in a browser independent format;
a server program (101) stored in the server-memory (921) causes the server to generate (440) a server-data descriptor (171) dependent on the client-data descriptor (170) and a copy (150') of the client-data (150) and the server-data (151); the server-data descriptor (171) having a browser independent format; and
the client program (100) causes the client (900) to update (450) the client-data (150) in client-data cache (920-1) according to the server-data descriptor (171).

38. The computer system (999) of claim 37, wherein, after the updating (450) of the client-data (150), the client program (100) further causes the client (900):
to compare (460) the server-data descriptor (171) with the client-data descriptor (170) to select a corresponding layout document (160-1, 160-2); and
to apply (470) the client-data (150) to the corresponding layout document (160-1, 160-2).

39. A client (900) computer in a computer system (999); the client (900) having a client-memory (920) for storing a layout document (160-1) and further comprising a client-data cache (920-1) for storing client-data (150); the client data (150) being used by the layout document (160-1); the client-memory (920) further comprising a client program (100) for receiving a sync-request (980-1) to synchronize the client-data (150) with server-data (151) of a server (901) of the computer system (999); the client (900) **characterized in that**:
the client-data cache (190-1) stores client-data (150) in a format that is independent of the browser (120) and the client's (900) operating system;
the layout document (160) uses the client-data (150) via a plurality of predefined client-side application independent functions (100-1);
the client program (100) causes the client (900):
a) to create (730) a client-data descriptor (170) in a browser independent format;
b) to receive (740) a server-data descriptor (171) that is generated by the server (910) and that depends on the client-data descriptor (170) and a copy (150') of the client-data (150) and the server-data (151); the server-data descriptor (171) having a browser independent format; and
c) to update (450) the client-data (150) in client-data cache (920-1) according to the server-data descriptor (171).

40. The client (900) of claim 39, wherein, after the updating (450) of the client-data (150), the client program (100) further causes the client (900):
to compare (760) the server-data descriptor (171) with the client-data descriptor (170) to select a corresponding layout document (160-1, 160-2); and
to apply (770) the client-data (150) to the corresponding layout document (160-1, 160-2).

41. A server (901) computer in a computer system (999); the server (901) assisting a client (900) to refresh client-data (150) with respect to corresponding server-data (151) provided by the server (901); the client-data (150) being stored in a client-data cache (920-1); the server (901) **characterized by**:
a server computer program product (101) having a plurality of instructions for causing the server (901) to:
a) receive (810) from the client (900) a client-data descriptor (170) having a browser (120) independent format; and
b) generate (820) a server-data descriptor (171) dependent on the server-data (151) and the client-data descriptor (170) and a server-side copy (150') of the client-data (150); the server-data descriptor (171) having a browser (120) independent format.

42. A data structure for storing a client-data descriptor (170) in a browser (120) independent format, wherein the client-data descriptor (170) comprises:
a request type (980-1') that corresponds to a sync-request (980-1) received by a client (900) for refreshing client-data (150) with respect to server-data (151) of a server (901); the client-data (150) being stored in a client-data cache (920-1) of the client (900) ; and
a layout-ID (160-1') representing a layout document (160-1) used by the client, wherein the layout document (160-1) uses the client-data (150).

43. The data structure of claim 42, wherein the browser (120) independent format is XML.

44. The data structure of claim 42, wherein the client-data descriptor (170) further comprises a client-data increment (150-1) indicating the difference between predefined client-data (150-TO) and predetermined client-data (150-T1).

45. A data structure for storing a server-data descriptor (171) in a browser (120) independent format, wherein the server-data descriptor (171) comprises:
a layout-ID (160-1') representing a layout document (160-1) used by the client, wherein the layout document (160-1) uses client-data (150) stored in a client-data cache (920-1); and
a server-data increment (151-1) indicating the difference between the client-data (150) and server-data (151).

46. The data structure of claim 45, wherein the server-data increment (151-1) comprises object data (151-1') and layout data (151-1'').

47. The data structure of claim 45, wherein the browser (120) independent format is XML.
